(19)

Europäisches Patentamt

European Patent Office

Office européen des brevets

(11) **EP 4 450 921 B1**

(12) **EUROPEAN PATENT SPECIFICATION**

(45) Date of publication and mention
of the grant of the patent:
**14.01.2026 Bulletin 2026/03**

(21) Application number: **23169216.1**

(22) Date of filing: **21.04.2023**

(51) International Patent Classification (IPC):
***G01B 21/08*** (2006.01)  ***C03B 5/24*** (2006.01)

(52) Cooperative Patent Classification (CPC):
**C03B 5/245; G01B 21/085;** C03B 5/031

(54) **METHOD AND SYSTEM FOR MEASURING THICKNESS OF A FLOATING BATCH OF MATERIALS**

VERFAHREN UND SYSTEM ZUR MESSUNG DER DICKE EINER SCHWEBENDEN MATERIALCHARGE

PROCÉDÉ ET SYSTÈME DE MESURE DE L'ÉPAISSEUR D'UN LOT FLOTTANT DE MATÉRIAUX

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**23.10.2024 Bulletin 2024/43**

(73) Proprietor: **SAINT-GOBAIN ISOVER
92400 Courbevoie (FR)**

(72) Inventors:
• **Bousquet, David
92400 Courbevoie (FR)**
• **Voronkoff, Justine
93300 Aubervilliers (FR)**

(74) Representative: **Saint-Gobain Recherche
41 Quai Lucien Lefranc
93300 Aubervilliers (FR)**

(56) References cited:
WO-A1-80/02833    US-A- 4 194 077
US-A1- 2012 216 568

## Description

## Technical field

The invention pertains to computer implemented methods and systems for monitoring the stability of a batch of material floating on a pool of melt in an electric glass melting tank.

## Technical background

In conventional electric glass melting furnaces, a plurality of electrodes is immersed in a predetermined pattern within a pool of molten glass. An electric current is caused to flow through the molten glass between the electrodes to heat the glass by Joule effect.

A batch of materials, which may comprise raw materials, cullets, and other recycled materials, is continually or not supplied on the upper surface of the pool to provide both a source of materials and an insulating layer or crust thereover. However, as it gradually melts to form additional molten glass, the thickness of the layer drops and the heat loss from the body of molten glass in the furnace through the batch increases. Conversely, as additional batch material is distributed over the upper surface of the molten glass, the heat loss through the thicker layer decreases.

The batch is generally supplied in predetermined pattern by a movable feeder, conveyor, or sprinkler to carefully control the amount and maintain a minimum thickness over the upper surface of the pool to reduce heat loss, protect the feeder and avoid overflowing the furnace.

It is a common practice to inspect the interior of glass melting furnaces by means of infrared optical systems arranged within the walls of the furnaces. These systems allow a human observation of the stability of the batch of materials.

JPS 5 339 204 A, NIPPON ELECTRON OPTICS LAB 11.04.1978, JPH 0 7216 422 A, NIPPON STEEL CORP 15.08.1995, JP 2010 002 150 A, TAKUMA CO LTD 07.01.2010 and US 2018 231875 A1, HER MAJESTY THE QUEEN IN RIGHT OF CANADA AS REPRESENTED BY THE MINI OF NATURAL RESOURCES [CA] 16.08.2018 describes an inspecting system comprising an infrared arranged in front of a viewing window set within the wall of the furnace.

More sophisticated systems are also provided in the art for measuring parameters related to some features of the batch of materials.

WO 8002833 A1, OWENS CORNING FIBERGLASS CORP [US], 24.12.1980 describes a system for controlling the level, i.e., the thickness, of a batch of materials in electric glass melting furnace. The system comprises an infrared sensor which is mounted on or adjacent a feeder for obtaining a non-contact measurement of the temperature of the outer surface of the batch. The measured temperature is compared to a set point temperature and the level, i.e., the thickness, of the batch is increased or decreased by adjusting the feeding rate of the feeder according to an empirical relationship between the thickness and the temperature of the outer surface of the batch.

US 4 194 077 A, OWENS CORNING FIBERGLASS CORP [US], 18.03.1980 describes a system for controlling the level of a batch of materials in electric glass melting furnace. The system comprises an ultrasonic sensor which is mounted on a feeder and moves therewith over the batch. A non-contact measurement of the batch level is obtained, and the thickness of the batch may be calculated thereon from a relationship between the densities of the batch and the molten glass, and the levels thereof.

US 4 409 012 A, OWENS ILLINOIS INC [US], 11.10.1983 describes a method and apparatus for monitoring the surface coverage of a batch of materials floating on a pool of melt by processing a video recording of the top surface of both batch and melt within a glass melting furnace. Bimodal distributions of the number of pixels in function of their grey level are then drawn from the recorded images and, after a thresholding operation to separate the two modes, the relative amounts of batch and melt are estimated by integrating the area covered by each mode for different regions within the furnace.

JPH 0 656 432 A, NIPPON ELECTRIC GLASS CO, 01.03.1994 describes a method and a system for measuring the level of batch of materials floating on a pool of melt by processing of an image of a portion of the top surface of the batch which is irradiated by an illuminating device. The image is binarized and the barycentric coordinates of the white pixels are calculated. A change in the so calculated barycentric coordinates is assumed to reflect a change in the level of the batch owing to a variation of the amount of light reflected by the illuminated portion of the batch when its level is moving up or down.

WO 0248057 A1, SOFTWARE & TECH GLAS GMBH [DE], 20.06.2002 describes a method to measure the linearised increase in the level of batch coverage on a pool of melt by processing an image of the top surface of both batch and melt. The quotient of the dark pixels to the number of pixels within each line of the image in the direction transverse to the flowing direction of the melt is calculated. The evolution of the quotient in the flowing direction is assumed to reflect the level of batch coverage in that direction.

EP 1 655 570 A1, FRANKE MATTHIAS [DE], 10.05.2006 discloses a computer implemented method to monitor the inner area of glass melting furnace by comparing the positions of selected objects between infrared images of the inner area acquired at successive points in time. The method may be used to monitor the motion of different moving objects, e.g., the batch of materials floating on the pool of melt.

WO 2018/104695 A1, LAND INSTRUMENTS INTERNATIONAL LTD [GB], 14.06.2018, discloses a control unit to identify batch of materials floating on a pool of melt from a thermal imaging camera configured to acquire thermal images of the top surface of both batch and melt. The position of the batch is identifier by the low temperature regions of the thermal images. The movement of the batch may be tracked, and its speed calculated by processing thermal images acquired at successive points in time. The control unit may be configured to correct the perspective view of the thermal image, hence the parameters derived therefrom are in the real-world coordinates.

WO 2022/242843 A1, GLASS SERVICE A S [CZ], 24.11.2022 discloses an improvement of the method described in EP 1 655 570 A1, FRANKE MATTHIAS [DE], 10.05.2006. The method further comprises a deviationcompensation step of correcting the deviation within the infrared images which is due to variation in infrared camera view in the course of time. Compared to the method described in EP 1 655 570 A1, FRANKE MATTHIAS [DE], 10.05.2006, the data derived from the image processing is more accurate and allow determining new parameters such as the temperature of the batch, the batch melting rate, the batch position, and the batch migration patterns and velocity.

## Summary of the invention

### Technical problem

A key process parameter, among others, for an efficient operation of an electric glass or stone making furnace is the thickness of the batch materials since it directly affects the amount of power to be supplied for a homogeneous melting.

However, current methods suffer from several drawbacks as local heterogeneities within the batch, in particular what are called 'hot spots' or 'volcanos' and correspond to holes within the batch that are forming after full local melting and/or, owing to the granular nature of the batch and its inherent instabilities as piled-up materials onto a moving pool of melt, after sliding movements within the batch, are not well considered in the measure or the calculus based thereon.

For methods based on the measure of the levels of both batch and melt, and the calculus of the difference thereof, they fail to accurately model the heterogenous coverage of the batch over the pool of melt in an electric glass or stone melting furnace. Indeed, within electric glass or stone melting furnace, parts of the batch may drift from each other under convective effects occurring within the pool of melt, like the plate tectonics on Earth. Contrary to fuel glass or stone melting furnace, this phenomenon may lead to strong variation in the thickness of the batch over the whole surface of the pool of melt. For instance, whereas, in a fuel melting furnace, the thickness of the batch is expected to decrease as it moves towards the forehearths, in an electric melting furnace it may remain relatively stable at the forehearths or decrease in directions other than the flowing direction of the melt.

On the other hand, for the same reasons, methods for estimating the thickness of the batch that rely only on a measure of the level of the batch and assumptions regarding the relationship between densities of the batch and the molten glass, and the levels thereof, suffer from the same flaws. Indeed, assuming a heterogeneous batch should present the same density everywhere may lead to overestimation unless a correcting function is applied to take local variations into account. However, such correction may not be easy as a previous modelling of the evolution of the batch properties and dynamics over time may be required.

Moreover, as pressure drop may occur between the melting part and the refining part in electric glass or stone melting furnace, the level of the molten glass within these two parts may not be equal. Using, as it may be currently done in the art, the level in the refining part as a proxy to estimate the level of the molten glass under the batch of materials in the melting part may then lead to wrong estimation thereof and, thus, the thickness of the batch which may be determined from this estimation may be erroneous.

In other hand, the methods based on the processing of images of both batch and melt should be able to provide results that are more representative of the heterogeneities of the batch. As images are direct acquisitions of the batch along with its 'hot spots' or 'volcanos', the real surface coverage of the batch over the pool of the melt should be better measured. However, despite mentioning that the thickness of the batch can be derived from image processing, current methods remain silent on how to proceed so in concrete terms. In particular, they do not provide any details on or example of calculations or image transformations to perform to get an accurate value.

Finally, past experiences in optimizing the energy consumption of electric furnaces showed that portions of the batch that reached their local stationary temperature, i.e., that are at thermal equilibrium, have a direct impact on the power to be supplied for an efficient melting. Hence, monitoring in real time the amount of batch at thermal equilibrium should help to overcome the issues of underheating and overheating that may often be encountered by furnace operators when setting up electric furnace. However, current methods are unable to provide such information on the state of the batch within the furnace.

Thus, there is a still a need for an efficient and reliable method to estimate the thickness of parts of a batch of materials floating on pool of melt which reached their stationary temperature. Ideally, the method should also be able to provide the variation over time and/or the spatial distribution of the thickness over the pool of melt. Further, it should also be versatile enough to provide values for other key parameters relating to the stability of the batch over time, e.g., the spatial distribution of the 'hot spots' or 'volcanos' and the movement thereof over time.

Solution to the technical problem

In a first aspect of the invention, there is provided a computer implemented method for measuring the thickness of a batch of materials floating on a pool of melt in a glass melting furnace as described in claim 1, dependant claims being advantageous embodiments.

In a second aspect of the invention, there is provided a data processing device, a computer program, and a computer-readable medium to implement the method of the first aspect.

In a third aspect of the invention, there is provided a process for measuring the thickness of a batch of materials floating on a pool of melt.

In a fourth aspect of the invention, there is provided a system for measuring the thickness of a batch of materials floating on a pool of melt.

Advantages of the invention

A first outstanding advantage of the invention is that the thickness of any region of the batch of materials which are at thermal equilibrium is precisely and accurately calculated. Over- or under-estimation of the thickness is avoided because the invention does not rely on measures of the batch and/or melt level, or relationships between densities thereof. Variations of thickness over the batch from local heterogeneities or convective effects within the pool of melt are also better modelled.

A second advantage of the invention is that it may provide the variation over time and/or the spatial distribution of the thickness of the batch over the pool of melt. Hence, it may be advantageously implemented for a real time-monitoring of the thickness of the batch during the entire lifecycle thereof within the electric furnace.

A third advantage, which is a consequence of the first, is that the invention provides more reliable and representative information on the state of the batch in term of thickness so that the power to be supplied to the electrodes of the electric furnace may be better adjusted for an efficient melting, saving energy consumption and costs. In this context, the information provides as output data by the invention may advantageously be feed as input data to a control loop, e.g., to a feedback controller, for a real-time adjustment of the power to be supplied to the electrodes of the furnace.

A fourth advantage is that, in certain embodiments, the invention may further provide key parameters relating to the stability of the batch over time, e.g., the spatial distribution of the 'hot spots' or 'volcanos', their movements, and the field of velocity vectors of the batch.

**Brief description of drawings**

Fig. 1 is a schematic representation of an example of manufacturing line of glass or stone fibres.

Fig. 2 is a schematic cross-section of an example of electric glass or stone melting furnace.

Fig. 3 is a data flow diagram of a computer implemented method according to the first aspect of the invention.

Fig. 4 is a physical data flow diagram of a processing data system to implement a method according to the first aspect of the invention.

**Detailed description of embodiments**

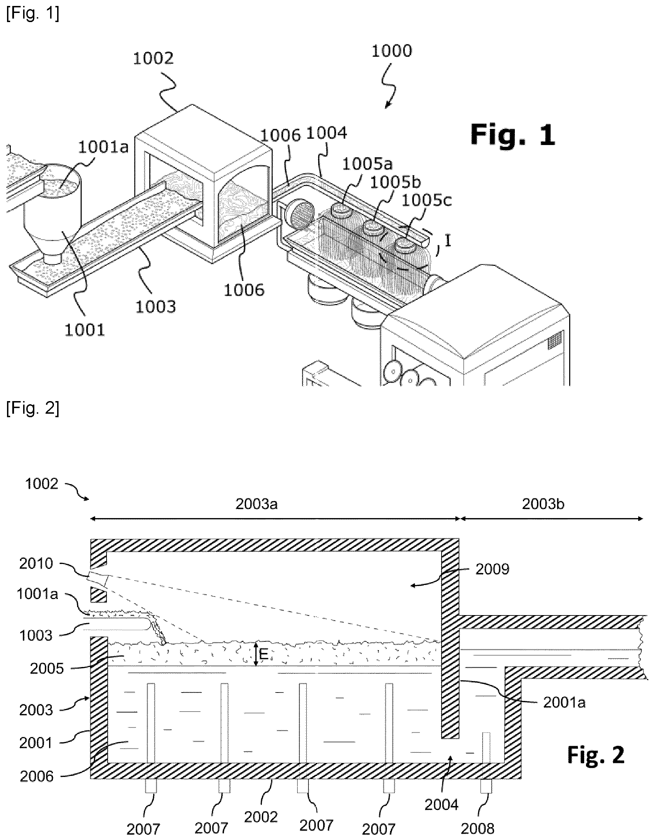

With reference to fig. 1, a manufacturing line 1000 of glass or stone fibres though the method of internal centrifugation may generally comprise silos 1001 for storing raw materials 1001a, e.g., minerals compounds and/or cullet, an electric glass or stone melting furnace 1002 to melt raw materials 1001a which are conveyed from silos 1001 by means of conveyor 1003, and one or more fiberizing tools 1005a, 1005b, 1005c which are fed with molten glass or stone 1006 through a forehearth 1004. The forehearth is usually designed as an open or closed channel provided with openings right above each fiberizing tools 1005a, 1005b, 1005c to fed each of them with molten glass or stone 1006.

With reference to Fig. 2, adapted from US 4 194 077 A, OWENS CORNING FIBERGLASS CORP [US], 18.03.1980, an electric glass or stone melting furnace 1002 comprise refractory walls 2001 and a refractory floor 2002 forming a tank 2003 which is divided into a melting part 2003a and a refining part 2003b by a dividing wall 2001a. The two parts 2003a, 2003b communicates with each other by a mouth 2004 located at the bottom of the dividing wall 2001a at the level of the floor 2002.

The raw materials 1001a are conveyed into the melting part 2003a, forming a batch 2005 which floats on the surface of the pool 2006 and which is progressively melted by a series of immersed electrodes 2007. Alternatively, or complementarily, the series of electrodes may comprise immersed plunging as described in FR 2 599 734 A1, SAINT GOBAIN RECH [FR] 11.12.1987. As convection occurs within the pool 2006 of melt, the melt flows through the mouth 2004 from the melting part 2003a to the refining part 2003b which is connected to the forehearth or feeders. One or two immersed electrodes 2008 may be located at the level of the floor 2002 on one or each side of the mouth 2004.

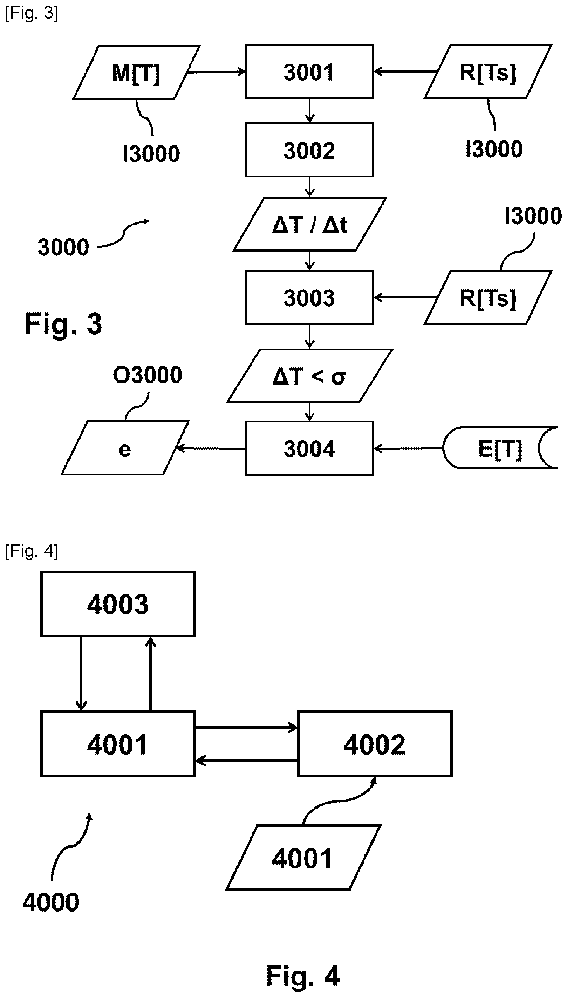

With reference to Fig. 2 and Fig. 3, in a first aspect of the invention, there is provided a computer implemented method 3000 for measuring the thickness, e, of a batch 2005 of materials floating on a pool 2006 of melt in an electric glass or stone melting furnace 1002;

wherein said method takes, as input data, a set I3000 of timescale temperature maps, M[T] of the batch 2005 of materials, a range, R[Ts] of expected values for the stationary temperature, Ts, of the batch 2005, and a threshold value, σ, for the variation of temperature, ΔT, over time, Δt; wherein said method provides, as output data, the spatial distribution O3000 of thicknesses of the batch 2005 over the surface 2005a thereof;

wherein said method 3000 comprises the following steps:

(a) selecting 3001, within each temperature map, M[T], of the provided set I3000, the regions for which the temperature is within the range R[Ts] of expected values for the stationary temperature, Ts, of the batch 2005;
(b) computing 3002 the variation of temperature, ΔT, within the same detected regions between successive temperature maps in a given time range, Δt;
(c) selecting 3003 the regions of step (b) wherein the variation ΔT of temperature over time, Δt, is below the threshold value, σ, provided as input;
(d) computing 3004, for each point of the temperature maps within each of the regions selected at step (c), the thickness, E, of the batch 2005,

wherein said thickness, E, is calculated by applying, on said each point, a function, E(Ts), defining a relationship between the thickness and the stationary temperature, Ts, and wherein said function, E(Ts), is based on a simulated or experimental heat flow transfer, or on an empirical model.

In the context of the invention, a 'temperature map' should be interpreted as its common definition in the field of cartography, e.g., as a representation or a distribution of temperatures over a scaled or nonscaled surface. In practice, it may be construed as a collection of temperature data in which each temperature data is linked to a position over the surface of a batch 2005 of material. These positions may be coordinates in pixel or in length units.

In the context of the invention, a set of temperature maps should be understood as collection of temperature maps the number of which may be arbitrary or depend on the technical limitations or settings of the means, e.g., camera, to acquire them.

In the context of the invention, a set of timescale temperature maps is a collection of temperature maps acquired over a period of time, i.e., a timescale. The period of time may be fixed arbitrarily depending on the means, e.g., camera used to acquire and/or the time over which the temperature maps are deemed to be acquired. It may also be a continuous, i.e., non-ending, period of time, for instance, in case of a monitoring. The frequency at which the temperature maps are acquired may be a matter of choice depending on the technical limitations of the means, e.g., camera, used to acquire them and the timescale over which the batch is known or expected to evolve. As a rule of thumb, the frequency should be set so that the evolution, e.g., movements, of the certain features, e.g., hot and/or cold spots, can be observed on successively acquired temperature maps.

In the context of the invention, the expression 'stationary temperature' applied to the batch should be interpreted as the temperature corresponding to the thermal equilibrium of the batch 2005, i.e., when the heat flow from the pool of melt under the batch is balanced by the heat flow from the furnace 1002 within the inner area 2009 of the furnace 1002 above the batch 2005. At thermal equilibrium, i.e., when the batch has reached its stationary temperature, Ts, the temperature of the batch 2005 should be stable over time or vary very slightly over time.

The heat equation of the batch may be expressed by the following equation (1):

$$\rho c_p e \frac{dT}{dt} = \frac{\lambda}{e}(T_{melt} - T) - \left[h(T - T_f) + \sigma\varepsilon(T^4 - T_f^4)\right] = 0$$

Where, ρ is the density of the batch, cp is the specific heat capacity of the batch, e is the thickness of the batch, T is the temperature of the batch 2005, t is time, λ is the thermal conductivity of the batch 2005, σ is the Stefan-Boltzmann constant, h is the convective heat transfer coefficient of the batch 2005, ε is thermal emissivity coefficient of the batch 2005, Tf is the temperature within the inner area 2009 of the furnace 1002 above the batch 2005, Tmelt is the temperature of the pool 2006 of melt, and T is the temperature of the batch 2005.

In the region of the furnace 1002 where the fresh, non-heated, batch is supplied by the feeder, the conveyor, or the sprinkler 1003 onto the pool 2006 of melt, the batch 2005 may be colder than in farther regions of the furnace 1002. As time goes by, the batch is progressively heated, and its temperature increases to reach a stationary temperature.

Inversely, in the vicinity of regions of 'hot spots' or 'volcanoes', the temperature of the batch 2005 may increase and become higher than its stationary temperature because of the local unbalance between the heat flow from the pool 2006 of melt under the batch 2005 and the heat flow from the inner area of the furnace 1002 above the batch 2005.

Between these extrema, e.g., away from the feeding zone and from the hot spots or volcanos, the batch 2005 is expected to be at thermal equilibrium and have reached its stationary temperature.

In addition to the problems mentioned above regarding the prior art, the present invention provides a clever solution to this issue.

In step (a), regions of the temperature map which are within the range, R[Ts], of expected values for the stationary temperature provided as input are selected. This operation allows to identify the regions of the batch 2005 which may be susceptible to be at thermal equilibrium, i.e., those regions for which the probability that they have reached their stationary temperature is the highest.

The range, R[Ts], of expected values for the stationary temperature may be determined either empirically and/or through the processing of the temperature maps provided as input.

In advantageous embodiments, the range, R[Ts], of expected values for the stationary temperature, Ts, of the batch 2005 may be a range of values determined experimentally on similar batches of materials in similar melting conditions. For instance, the values may come from history of punctual and/or monitored measures of the temperature in certain regions of the batch surface acquired by operators and/or automatic sensors, e.g., infrared sensors, from previous production trials or campaigns carried out in a particular electric glass or stone melting furnace 1002. An outstanding advantage of this approach is that the range, R[Ts], of expected values for the stationary temperature may be better representative of the thermal behaviour of both electric furnace and the composition of the batch under consideration.

Surprisingly, it was found in the context of the invention, that a range, R[Ts], of expected values for the stationary temperature between 20°C and 200°C, preferably between 70°C and 140°C, may be suitable for most cases of electric glass or stone melting furnaces.

Alternatively, or complementarily, the range, R[Ts], of expected values for the stationary temperature, Ts, of the batch 2005 may be a defined range of values between the two modes of a bimodal distribution computed from one or a plurality of the temperature maps of the provided set I3000. Computing the bimodal distribution of the temperature maps may allow to discriminate between the two extrema that are the coldest regions of the batch, e.g., the regions close to the feeder, and the hottest regions, e.g., the hot spots or volcanos. Fixing a range of stationary temperatures between these extrema may be construed as a kind of filter to select the regions with the highest probabilities to be in the thermal equilibrium. Methods such as those described in US 4 409 012 A, OWENS ILLINOIS INC [US], 11.10.1983 may be adapted to temperature maps to compute the bimodal distribution.

In step (c), the regions selected at step (b) for which the variation $\Delta T$ of temperature over time, $\Delta t$, is below the threshold value, $\sigma$, provided as input, are selected. Had the regions of the batch 2005 reached their stationary temperature, their temperature should remain stable over time or vary slightly, i.e., $\Delta T/\Delta t \approx 0$. Thus, this operation allows to identify the regions of the batch which are effectively in thermal equilibrium, i.e., those regions that have effectively reached their stationary temperature, Ts. In other words, the step (c) further refines the selection of regions in thermal equilibrium which was initiated at step (a).

Surprisingly, in the context of the invention, it was found that the threshold value, $\sigma$, may be low for most cases of electric glass or stone melting furnaces. Accordingly, in preferred embodiments, the threshold value, $\sigma$, for the variation $\Delta T$ of temperature over time, $\Delta t$, may be 5°C/min, preferably 2°C/min, more preferably 1°C/min.

Since the efficiency and the accuracy of the invention for measuring the thickness, E, of the batch 2005 rely on the effective and precise selection of the regions of the batch in thermal equilibrium, the combination of steps (a) to (c) should be considered as one the core features of the method 3000 according to the invention and, consequently, as an outstanding difference from the practices described in the art.

In step (d), the thickness, E, of the batch 2005 is computed for regions selected at step (c) according to a function defining a relationship between the thickness, E, and the stationary temperature, Ts. There is no unique function. Any adapted function, either empirical or theoretical, which may be able to link the thickness of the batch to its local stationary temperature may be used.

As already emphasized, one advantage of the invention is to allow an effective and precise selection of the regions of the batch 2005 in thermal equilibrium, i.e., regions which have locally reached their stationary temperature. Thus, the thickness of the batch may be advantageously derived from the aforementioned equation (1) of thermal equilibrium provided that the thermal properties of the batch may be determined.

Accordingly, in certain embodiments, the method may further take, as input data, the temperature, $T_f$, within the inner area of the furnace 1002 above the batch 2005, the temperature, $T_{melt}$, of the pool 2006 of melt; wherein the function E(Ts) is a heat flow transfer function provided by the following equation (2):

$$E(T_s) = \frac{\lambda(T_{melt} - T_s)}{h(T_s - T_f) + \sigma\varepsilon(T_s{}^4 - T_f^4)}$$

wherein $\lambda$ is the thermal conductivity of the batch 2005, $\sigma$ is the Stefan-Boltzmann constant, h is the convective heat transfer coefficient of the batch 2005, $\varepsilon$ is thermal emissivity coefficient of the batch 2005, Tf is the temperature within the inner area of the furnace above the batch 2005, Tmelt is the temperature of the pool 2006 of melt, and Ts is the stationary temperature of the batch 2005 for which the thickness, E, is to be computed.

The parameters $\lambda$, h and $\varepsilon$ may be calculated theoretically knowing, the convection effects within the inner area 2009 of the furnace 1002, the chemical composition of the batch 2005, and, as batch are generally supplied as a granular material, its bulk density. Nevertheless, as already emphasized, during the lifetime of the batch 2005 in the furnace, the bulk density, the granular distribution and, also, the chemical composition of the batch may locally vary within its thickness and within its entire coverage, depending on the temperature gradients and the movements of convection occurring within the pool 2006 of melt which locally determine the melting state and the melting rate of the batch 2005. One direct consequence is that the theoretically calculated parameters may not be well representative of the local properties of the batch 2005 and might induce inaccuracies in the determination of the local thickness within the batch. Despite these drawbacks, theoretically calculated parameters may still be relevant as approximative proxy for batch which thermal and physical properties are not expected to vary excessively during its lifetime within the furnace.

Alternatively, or complementarily, the parameters $\lambda$, h and $\varepsilon$ may be determined experimentally by carrying out measurements on similar batches evolving in similar melting conditions. For example, experiments may be conducted in pilot electric furnaces to mimic the behaviour within large scale production furnaces, and the parameters $\lambda$, h and $\varepsilon$ calculated from in-situ and/or ex-situ measurements of the thermal and physical properties of the batches. The so determined parameters may then be more representative of the real behaviour of a batch in an electric furnace of a manufacturing line.

However, the timescale and the changing rate in manufacturing lines may not always be compatible with those of experiments which may be conducted in the framework of laboratory or pilot furnaces. Furthermore, scaling effects may occur so that what is calculated and/or measured in labs or pilots may not work efficiently when applied to large scale electric furnace. Therefore, it may be more valuable to rely on empirical function for defining a relationship between the thickness and the stationary temperature of the batch.

In this context, in preferred embodiments, the function E(Ts) may be an empirical model provided by the following equation (3):

$$E(T_s) = e_1 + \frac{T_s - T_1}{T_2 - T_1}(e_2 - e_1)$$

wherein $T_1$ and $T_2$ are two experimentally measured stationary temperatures of the batch 2005, $e_1$ and $e_2$ are two experimentally measured thicknesses of the batch 2005 corresponding to the temperatures $T_1$ and $T_2$ respectively, Ts is the stationary temperature of the batch 2005 for which the thickness, E, is to be computed.

Surprisingly, it was found that above equation (3) is a simple, elegant, and robust manner to calculate the thickness of the batch 2005 corresponding to the selected regions of the temperature maps with a high level of accuracy without relying on the foreknowledge of any physical and/or thermal properties of the batch. Moreover, the two temperatures, T1 and T2, and the two thicknesses, e1 and e2, can be measured experimentally in lab scale or pilot furnaces and/or industrial furnaces. In the latter case, results that are the most representative of what is really occurring in the industrial furnace may be obtained. As a further consequence of not relying on the foreknowledge of any physical and/or thermal properties of the batch 2005, the equation (3) may be easily implemented industrially.

The method according to the invention may be adapted to provide other key parameters to the stability of the batch over time, e.g., the spatial distribution of the 'hot spots' or 'volcanos' and the movement thereof over time.

In certain embodiments, the method may further comprise a step (e) of detecting regions, within each temperature map of the provided set I3000, by applying a object-detecting function to said temperature map, wherein the object-detecting function is configured to process regions with a temperature equal or superior to a threshold value, $\theta$; wherein the method further provides, as output data, the spatial distribution of the detected regions over time.

To detect 'hot spots' or 'volcanos', the threshold value, $\theta$, may be fixed to the temperature at which said 'hot spots' or 'volcanos' are expected or observed to occur within the layer of batch 2005. This temperature usually varies depending on several parameters such as the melting temperature of the batch, the temperature gradients, and the movements of convection within the pool 2006 of melt, the power provided to the furnace 1002, the temperature within the inner area of the furnace above the batch 2005...

The threshold value, θ, may be determined experimentally through the inner inspection of the furnace 1002 by means of temperature sensors, e.g., thermocouples, infrared sensors. It may also be determined automatically by computing the statistical distribution within the temperature maps and determining, from this distribution, the cut-off temperature above which the temperature correspond to the 'hot spots' or 'volcanos'.

As 'hot spots' or 'volcanos' mainly correspond to holes within the batch 2005 through which the pool 2006 of melt may rise or be seen and the pool 2006 of melt often show the highest temperature, the threshold value, θ, may be fixed so that to represent a relatively small difference from the highest temperature detected in temperature maps.

The regions of the temperature maps which are detected through the object-detecting function according to the above embodiments may provide the spatial distribution of the 'hot spots' or 'volcanos' over the layer of the batch 2005. Other indicators such as their number, their density, i.e., number per surface area, their distribution in sizes, may also be derived.

The blob-detecting function, and a threshold value, θ, may be implemented through different image processing algorithms. Accordingly, in certain embodiments, the object-detecting function may be selected among the Otsu thresholding function, the Laplacian of Gaussian function, the Determinant of Hessian function, the Difference of Gaussian method, and a watershed-based grey-level blob-detection function.

The art provides different implementation of these algorithms, e.g., the python scikit-image package.

Onto the surface of the pool 2006 of melt, because of the movements of convection occurring within it, the batch 2005 may not follow a strictly linear path from the feeder 1003 to the dividing wall 2001a separating the melting part 2003a and the refining part 2003b of the furnace 1002. Instead, part of the batch 2005 may depart from the global flowing direction of the pool 2006 of melt to the refining part 2003b and may follow more curvilinear complex path. In this context, the travel of the batch 2005 may be better represented by a field of velocity vectors pointing in several directions but in average to the flowing direction of the pool 2006 of melt.

For a better adjustment of the furnace parameters, e.g., the supplying rate of the batch, the distribution of power between the electrodes 2007, 2008, it may be valuable to monitor the vector field of the velocity of the batch 2005. In this scope, in complement embodiments, the method 3000 may further comprise a step (f) of computing the velocity of the detected regions at step (e) by calculating the displacement of said regions over time in the time scale of the set of timescale temperature maps. For instance, by comparing successive temperature maps in which the same regions are detected, the displacement of said detected regions may be calculated and their velocity computed by dividing the calculated displacement by the time interval between the successive temperature maps. This operation may be repeated for the entire set of timescale temperature maps.

In a second aspect of the disclosure, with reference to Fig. 4, there is provided a data processing system 4000 comprising means 4001 for carrying out a method 4000 according to any one of the embodiments of the first aspect of the invention. There is also provided a computer program I4001 comprising instructions which, when executed by a computer, cause the computer to carry out a method 4000 according to any one of embodiments of the first aspect of the invention.

The data processing system 4000 comprises means 4001 for carrying out a method according to any of the embodiments of the first aspect of the invention. Example of means 4001 may be a device which can be instructed to carry out sequences of arithmetic or logical operations automatically to perform tasks or actions. Such device, also called computer, may comprise one or more Central Processing Unit (CPU) and at least a controller device that are adapted to perform those operations.

It may further comprise other electronic components like input/output interfaces 4003, non-volatile or volatile storage devices 4002, and buses that are communication systems for the data transfer between components inside a computer, or between computers. One of the input/output devices may be user interface for human-machine interaction, for example graphical user interface to display human understandable information.

As calculation may require a lot of computational power to process substantial amounts of data, the data processing system may advantageously comprise one or more Graphical Processing Units (GPU) whose parallel structure makes them more efficient than CPU, in particular for image processing.

The computer program I4001 may be written through any kind of programming language, either compiled or interpreted, to implement the steps of the method according to any embodiments of the first aspect of the invention. The computer program I4001 may be part of a software solution, i.e., part of a collection of executable instructions, code, scripts, or the like and/or databases.

In certain embodiments, there may also be provided a computer-readable storage or medium 4002 comprising instructions which, when executed by a computer, cause the computer to carry out the method according to any of the embodiments of the first aspect of the invention.

The computer-readable storage 4002 may be preferably a non-volatile non-transitory storage or memory, for example hard disk drive or solidstate drive. The computer-readable storage may be removable storage media or a non-removable storage media as part of a computer.

Alternatively, the computer-readable storage may be a volatile memory inside a removable media.

The computer-readable storage 4002 may be part of a computer used as a server from which executable instructions can be downloaded and, when they are executed by a computer, cause the computer to carry out a method according to any of the embodiments described herein.

Alternatively, the program I4001 may be implemented in a distributed computing environment, e.g., cloud computing. The instructions may be executed on the server to which client computers may connect and provide encoded data as inputs to the method. Once data are processed, the output may be downloaded and decoded onto the client computer or directly send, for example, as instructions. This kind of implementation may be advantageous as it can be realised in a distributed computing environment such as a cloud computing solution.

In a third aspect of the invention, there is provided a process for measuring the thickness of a batch 2005 of materials 1001a floating on a pool 2006 of melt in an electric glass or stone melting furnace 1002, wherein said process comprises the following steps:

- acquiring a set I3000 of timescale temperature maps, M[T], of the surface of the batch 2005 of materials 1001a within the inner area 2009 of the melting furnace 1002;
- implementing, by means of a data processing device 4000, the method 3000 according to any of embodiments of the second aspect of the invention, wherein the acquired set I3000 of timescale temperature maps M[T] is provided as input data to said method 3000.

For a implementing the process, in a fourth aspect of the invention, with reference to Fig. 2, there is provided a system for measuring the thickness of a batch 2005 of materials 1001a floating on a pool 2006 of melt in an electric glass or stone melting furnace 1002, wherein said system comprises:

- an acquiring device 2010 configured to acquire a set I3000 of timescale temperature maps, M[T], of the surface of the batch 2005 of materials 1001a within the inner area 2009 of the furnace 1002;
- a data processing device 4000 according to any of embodiments of the second aspect of the invention, wherein said data processing device 4000 and the acquiring device 2010 are wired or wirelessly connected to each other for transferring data.

In preferred embodiments, the acquiring device 2010 may comprise an infrared camera configured to acquire a set I3000 of timescale infrared maps, M[T] and said infrared camera, or the data processing device 4000 comprises means for converting the set of timescale infrared maps into a set I3000 of timescale temperature maps.

Examples of acquiring device comprising an infrared camera that are adapted to acquire infrared maps in a glass or stone melting furnace are described in the art, e.g., JPS 5 339 204 A, NIPPON ELECTRON OPTICS LAB 11.04.1978, JPH 0 7216 422 A, NIPPON STEEL CORP 15.08.1995, JP 2010 002 150 A, TAKUMA CO LTD 07.01.2010 and US 2018 231875 A1, HER MAJESTY THE QUEEN IN RIGHT OF CANADA AS REPRESENTED BY THE MINI OF NATURAL RESOURCES [CA] 16.08.2018.

An example of infrared camera may be an OPTRIS® PI 400 infrared camera that is commercialised by company OPTRIS® infrared sensing. The camera has an optical resolution of 382x288 pixels and an IR FPA $25\mu m$ x $25\mu m$ sensor in the spectral range $7.5\mu m$ - 13 $\mu m$. The detected temperature range is 0 - 250°C or 150°C - 900°C.

The acquiring device 2010 may be provided with heat and dust shields in the form of protective windows and/or gas shields located in front of the objective. In preferred embodiments, the acquiring device may be an infrared camera in front of which is placed a flared corolla adapted to be placed in front of an opening in a wall 2001 of the electric glass or stone melting furnace 1002. The corolla may comprise on its periphery an injection nozzle to inject inert gas, e.g., nitrogen towards the objective so that to purge any dust and to evacuate heat from the furnace. Between the corolla and the camera lens, a non-removable infrared-transparent window may also isolate the camera from the furnace atmosphere.

Means for converting infrared maps to temperature maps rely on inference from the black- or grey-body radiation. They are extensively described in the art, e.g., in the Technical Specification IEC 62492-1 TS: Industrial process control devices - Radiation thermometers - Part 1: Technical data for radiation thermometers, and in the ASTM-E1256 Standard Test Methods for Radiation Thermometers (Single Waveband Type).

Depending on the location of the acquiring device 2010 in relation to the surface of the batch 2005 of materials 1001a, the temperature or infrared maps may suffer from perspective distortions. In this context, in certain embodiments, the data processing device 4000 may further comprise means for correcting the perspective view of the acquiring device by applying perspective or homographic transformation function on each temperature map of the set I3000 of timescale temperature maps M[T].

Examples of perspective or homographic transformation function are provided in the OPENCV python library. They may also be implemented as a part of the computer implemented method 3000 according to the first aspect of the invention.

The invention, in all its aspects, may be applied to, but is by no means limited to, many processes for the manufacture of glass products, e.g., glass wool, rock or stone wool, textile glass yarn, flat glass or hollow glass.

## Citation List

Patent Literature

JPS 5 339 204 A, NIPPON ELECTRON OPTICS LAB 11.04.1978.
US 4 194 077 A, OWENS CORNING FIBERGLASS CORP [US], 18.03.1980.
WO 8002833 A1, OWENS CORNING FIBERGLASS CORP [US], 24.12.1980.
US 4 409 012 A, OWENS ILLINOIS INC [US], 11.10.1983.
JPH 0 656 432 A, NIPPON ELECTRIC GLASS CO, 01.03.1994.
JPH 0 7216 422 A, NIPPON STEEL CORP 15.08.1995.
WO 0248057 A1, SOFTWARE & TECH GLAS GMBH [DE], 20.06.2002.
EP 1 655 570 A1, FRANKE MATTHIAS [DE], 10.05.2006.
JP 2010 002 150 A, TAKUMA CO LTD 07.01.2010.
WO 2018/104695 A1, LAND INSTRUMENTS INTERNATIONAL LTD [GB], 14.06.2018.
US 2018 231875 A1, HER MAJESTY THE QUEEN IN RIGHT OF CANADA AS REPRESENTED BY THE MINI OF NATURAL RESOURCES [CA] 16.08.2018.
WO 2022/242843 A1, GLASS SERVICE A S [CZ], 24.11.2022.

Non-Patent Literature

Technical Specification IEC 62492-1 TS: Industrial process control devices - Radiation thermometers - Part 1: Technical data for radiation thermometers.
ASTM-E1256 Standard Test Methods for Radiation Thermometers (Single Waveband Type).

## Claims

1. A computer implemented method (3000) for measuring the thickness, e, of a batch (2005) of materials floating on a pool (2006) of melt in an electric glass or stone melting furnace (1002);

   wherein said method takes, as input data, a set (13000) of timescale temperature maps, M[T] of the batch (2005) of materials, a range, R[Ts] of expected values for the stationary temperature, Ts, of the batch (2005), and a threshold value, $\sigma$, for the variation of temperature, $\Delta T$, over time, $\Delta t$;
   wherein said method provides, as output data, the spatial distribution (O3000) of thicknesses of the batch (2005) over the surface thereof;
   wherein said method (3000) comprises the following steps:

   (a) selecting (3001), within each temperature map, M[T], of the provided set I3000, the regions for which the temperature is within the range R[Ts] of expected values for the stationary temperature, Ts, of the batch (2005);
   (b) computing (3002) the variation of temperature, $\Delta T$, within the same detected regions between successive temperature maps in a given time range, $\Delta t$;
   (c) selecting (3003) the regions of step (b) wherein the variation $\Delta T$ of temperature over time, $\Delta t$, is below the threshold value, $\sigma$, provided as input;
   (d) computing (3004), for each point of the temperature maps within each of the regions selected at step (c), the thickness, E, of the batch 2005, wherein said thickness, E, is calculated by applying, on said each point, a function, E(Ts), defining a relationship between the thickness and the stationary temperature, Ts, and wherein said function, E(Ts), is based on a simulated or experimental heat flow transfer, or on an empirical model.

2. The method (3000) according to claim 1, wherein said method further takes , as input data, the temperature, $T_f$, within the inner area of the furnace 1002 above the batch (2005), the temperature, $T_{melt}$, of the pool (2006) of melt;

wherein the function E(Ts) is a heat flow transfer function provided by the following equation

$$E(T_s) = \frac{\lambda(T_{melt} - T_s)}{h(T_s - T_f) + \sigma\varepsilon(T_s^4 - T_f^4)}$$

wherein $\lambda$ is the thermal conductivity of the batch 2005, $\sigma$ is the Stefan-Boltzmann constant, h is the convective heat transfer coefficient of the batch 2005, $\varepsilon$ is thermal emissivity coefficient of the batch 2005, $T_f$ is the temperature within the inner area of the furnace above the batch 2005, $T_{melt}$ is the temperature of the pool 2006 of melt, and Ts is the stationary temperature of the batch 2005 for which the thickness, E, is to be computed.

3. The method (3000) according to claim 1, wherein the function E(Ts) is an empirical model provided by the following equation: $E(T_s) = e_1 + \frac{T_s - T_1}{T_2 - T_1}(e_2 - e_1)$ wherein $T_1$ and $T_2$ are two experimentally measured stationary temperatures of the batch 2005, $e_1$ and $e_2$ are two experimentally measured thicknesses of the batch 2005 corresponding to the temperatures $T_1$ and $T_2$ respectively, Ts is the stationary temperature of the batch 2005 for which the thickness, E, is to be computed.

4. The method (3000) according to any of claims 1 to 2, wherein the threshold value, $\sigma$, for the variation $\Delta T$ of temperature over time, $\Delta t$, is 5°C/min, preferably 2°C/min, more preferably 1°C/min.

5. The method (3000) according to any of the claims 1 to 4, wherein the range, R[Ts], of expected values for the stationary temperature, Ts, of the batch 2005 is a range of values determined experimentally on similar batches of materials in similar melting conditions or defined range of values between the two modes of a bimodal distribution computed from one or a plurality of the temperature maps of the provided set (13000).

6. The method (3000) according to any of claims 1 to 5, wherein the method further comprises a step (e) of detecting regions, within each temperature map of the provided set I3000, by applying a object-detecting function to said temperature map, wherein the object-detecting function is configured to process regions with a temperature equal or superior to a threshold value, $\theta$;
   wherein the method further provides, as output data, the spatial distribution of the detected regions over time.

7. The method (3000) according to claim 6, wherein the method comprises a step (f) of computing the velocity of the detected regions at step (e) by calculating the displacement of said regions over time in the time scale of the set of timescale temperature maps.

8. The method (3000) according to any of claim 6 to 7, wherein the object-detecting function is selected among the Otsu thresholding function, the Laplacian of Gaussian function, the Determinant of Hessian function, the Difference of Gaussian method, and a watershed-based grey-level blob-detection function.

9. A data processing device (4000) comprising means for carrying out a method according to any of claims 1 to 8.

10. A computer program (14001) comprising instructions which, when the program is executed by a computer, causes the computer to carry out a method according to any of claims 1 to 8.

11. A computer-readable medium (4002) comprising instructions which, when the program is executed by a computer, causes the computer to carry out a method according to any of claims 1 to 8.

12. A process for measuring the thickness of a batch (2005) of materials (1001a) floating on a pool (2006) of melt in an electric glass or stone melting furnace (1002), wherein said process comprises the following steps:

   - acquiring a set (13000) of timescale temperature maps, M[T], of the surface of the batch (2005) of materials (1001a) within the inner area (2009) of the melting furnace (1002);
   - implementing, by means of a data processing device (4000), the method (3000) according to any of claims 1 to 8, wherein the acquired set (13000) of timescale temperature maps M[T] is provided as input data to said method (3000).

13. A system for measuring the thickness of a batch (2005) of materials (1001a) floating on a pool (2006) of melt in an electric glass or stone melting furnace (1002), wherein said system comprises:

- an acquiring device (2010) configured to acquire a set (13000) of timescale temperature maps, M[T], of the surface of the batch 2005 of materials (1001a) within the inner area (2009) of the furnace (1002);
- a data processing device (4000) according to claim 9, wherein said data processing device (4000) and the acquiring device (2010) are wired or wirelessly connected to each other for transferring data.

14. A system according to claim 13, wherein the acquiring device (2010) comprises an infrared camera is configured to acquire a set of timescale infrared maps, M[T] and said infrared camera, or the data processing device (4000) comprises means for converting the set of timescale infrared maps into a set I3000 of timescale temperature maps.

15. A system according to any of claims 13 to 14, wherein the data processing device (4000) further comprises means for correcting the perspective view of the acquiring device by applying perspective or homographic transformation function on each temperature map of the set (I3000) of timescale temperature maps M[T].

**Patentansprüche**

1. Computerimplementiertes Verfahren (3000) zum Messen der Dicke, e, einer Charge (2005) von Materialien, die auf einem Schmelzpool (2006) in einem elektrischen Glas- oder Steinschmelzofen (1002) schwimmen;

wobei das Verfahren, als Eingabedaten, einen Satz (I3000) von Zeitskalentemperaturkarten, M[T] der Charge (2005) von Materialien, einen Bereich, R[Ts] von erwarteten Werten für die stationäre Temperatur, Ts, der Charge (2005), und einen Schwellenwert, $\sigma$, für die Temperaturschwankung, $\Delta$T, im Zeitverlauf, $\Delta$t, hernimmt;

wobei das Verfahren, als Ausgabedaten, die räumliche Verteilung (O3000) der Dicken der Charge (2005) über der Oberfläche davon bereitstellt;

wobei das Verfahren (3000) die folgenden Schritte umfasst:

(a) Auswählen (3001) innerhalb jeder Temperaturkarte, M[T], des bereitgestellten Satzes I3000, der Bereiche, für die die Temperatur innerhalb des Bereichs R[Ts] der erwarteten Werte für die stationäre Temperatur, Ts, der Charge (2005) liegt;

(b) Berechnen (3002) der Temperaturschwankung, $\Delta$T, innerhalb derselben erkannten Bereiche zwischen aufeinanderfolgenden Temperaturkarten in einem gegebenen Zeitbereich, $\Delta$t;

(c) Auswählen (3003) der Bereiche aus Schritt (b), in denen die Schwankung $\Delta$T der Temperatur im Zeitverlauf, $\Delta$t, unter dem Schwellenwert, $\sigma$, liegt, bereitgestellt als Eingabe;

(d) Berechnen (3004), für jeden Punkt der Temperaturkarten innerhalb jedes der Bereiche, die in Schritt (c) ausgewählt werden, der Dicke, E, der Charge 2005, wobei die Dicke, E, durch Anwenden, auf den jeden Punkt, einer Funktion, E(Ts), errechnet wird, die eine Beziehung zwischen der Dicke und der stationären Temperatur, Ts, definiert, und wobei die Funktion, E(Ts), auf einer simulierten oder experimentellen Wärmestromübertragung oder auf einem empirischen Modell basiert.

2. Verfahren (3000) nach Anspruch 1, wobei das Verfahren ferner, als Eingabedaten, die Temperatur, $T_f$, innerhalb des inneren Bereichs des Ofens 1002 über der Charge (2005), die Temperatur $T_{schmelzen}$, des Schmelzpools (2006) hernimmt;

wobei die Funktion E(Ts) eine Wärmestromübertragungsfunktion ist, die durch die folgende Gleichung bereit-gestellt wird

$$E(T_s) = \frac{\lambda(T_{schmelzen} - T_s)}{h(T_s - T_f) + \sigma\varepsilon(T_s{}^4 - T_f{}^4)}$$

wobei $\lambda$ die Wärmeleitfähigkeit der Charge 2005 ist, $\sigma$ die Stefan-Boltzmann-Konstante ist, h der konvektive Wärmeübertragungskoeffizient der Charge 2005 ist, $\varepsilon$ der thermische Emissionskoeffizient der Charge 2005 ist,

$T_f$ die Temperatur innerhalb des inneren Bereichs des Ofens über der Charge 2005 ist, $T_{schmelzen}$ die Temperatur des Schmelzpools 2006 ist und Ts die stationäre Temperatur der Charge 2005 ist, für die die Dicke, E, berechnet werden soll.

3. Verfahren (3000) nach Anspruch 1, wobei die Funktion E(Ts) ein empirisches Modell ist, das durch die folgende Gleichung bereitgestellt wird: $E(T_s) = e_1 + \dfrac{T_s - T_1}{T_2 - T_1}(e_2 - e_1)$ wobei $T_1$ und $T_2$ zwei experimentell gemessene stationäre Temperaturen der Charge 2005 sind, $e_1$ und $e_2$ zwei experimentell gemessene Dicken der Charge 2005 sind, die den Temperaturen $T_1$ beziehungsweise $T_2$ entsprechen, Ts die stationäre Temperatur der Charge 2005 ist, für die die Dicke, E, berechnet werden soll.

4. Verfahren (3000) nach einem der Ansprüche 1 bis 2, wobei der Schwellenwert, $\sigma$, für die Variation $\Delta T$ der Temperatur im Zeitverlauf, $\Delta t$, 5 °C/min, vorzugsweise 2 °C/min, mehr bevorzugt 1 °C/min beträgt.

5. Verfahren (3000) nach einem der Ansprüche 1 bis 4, wobei der Bereich, R[Ts], der erwarteten Werte für die stationäre Temperatur, Ts, der Charge 2005 ein Wertebereich ist, der experimentell an ähnlichen Chargen von Materialien unter ähnlichen Schmelzbedingungen bestimmt wurde, oder ein definierter Wertebereich zwischen den zwei Modi einer bimodalen Verteilung, der aus einer oder einer Vielzahl der Temperaturkarten des bereitgestellten Satzes (I3000) berechnet wird.

6. Verfahren (3000) nach einem der Ansprüche 1 bis 5, wobei das Verfahren ferner einen Schritt (e) zum Erkennen von Bereichen innerhalb jeder Temperaturkarte des bereitgestellten Satzes I3000 durch Anwenden einer Objekterkennungsfunktion auf die Temperaturkarte umfasst, wobei die Objekterkennungsfunktion konfiguriert ist, um Bereiche mit einer Temperatur zu verarbeiten, die gleich oder größer als ein Schwellenwert, $\theta$, ist; wobei das Verfahren, als Ausgabedaten, ferner die räumliche Verteilung der erkannten Bereiche im Zeitverlauf bereitstellt.

7. Verfahren (3000) nach Anspruch 6, wobei das Verfahren einen Schritt (f) zum Berechnen der Geschwindigkeit der in Schritt (e) erkannten Bereiche durch Errechnen der Verschiebung der Bereiche im Zeitverlauf in der Zeitskala des Satzes von Zeitskalentemperaturkarten umfasst.

8. Verfahren (3000) nach einem der Ansprüche 6 bis 7, wobei die Objekterkennungsfunktion aus der Otsu-Schwellenwertfunktion, der Laplace-Funktion der Gauß-Funktion, der Determinante-der-Hesse-Funktion, dem Gauß-Differenz-Verfahren und einer wasserscheidenbasierten Graustufen-Blob-Erkennungsfunktion ausgewählt wird.

9. Datenverarbeitungsvorrichtung (4000), umfassend Mittel zum Vornehmen eines Verfahrens nach einem der Ansprüche 1 bis 8.

10. Computerprogramm (14001), umfassend Anweisungen, die, wenn das Programm durch einen Computer ausgeführt wird, den Computer veranlasst, ein Verfahren nach einem der Ansprüche 1 bis 8 vorzunehmen.

11. Computerlesbares Medium (4002), umfassend Anweisungen, die, wenn das Programm durch einen Computer ausgeführt wird, den Computer veranlasst, ein Verfahren nach einem der Ansprüche 1 bis 8 vorzunehmen.

12. Verfahren zum Messen der Dicke einer Charge (2005) von Materialien (1001a), die auf einem Schmelzpool (2006) in einem elektrischen Glas- oder Steinschmelzofen (1002) schwimmen, wobei das Verfahren die folgenden Schritte umfasst:

    - Erfassen eines Satzes (I3000) von Zeitskalentemperaturkarten, M[T], der Oberfläche der Charge (2005) von Materialien (1001a) innerhalb des Innenbereichs (2009) des Schmelzofens (1002);
    - Implementieren, mittels einer Datenverarbeitungsvorrichtung (4000), des Verfahrens (3000) nach einem der Ansprüche 1 bis 8, wobei der erfasste Satz (I3000) von Zeitskalentemperaturkarten M[T] als Eingabedaten für das Verfahren (3000) bereitgestellt wird.

13. System zum Messen der Dicke einer Charge (2005) von Materialien (1001a), die auf einem Schmelzpool (2006) in einem elektrischen Glas- oder Steinschmelzofen (1002) schwimmen, wobei das System umfasst:

- eine Erfassungsvorrichtung (2010), die konfiguriert ist, um einen Satz (I3000) von Zeitskalentemperaturkarten, M[T], der Oberfläche der Charge 2005 von Materialien (1001a) innerhalb des Innenbereichs (2009) des Ofens (1002) zu erfassen;
- eine Datenverarbeitungsvorrichtung (4000) nach Anspruch 9, wobei die Datenverarbeitungsvorrichtung (4000) und die Erfassungsvorrichtung (2010) zum Übertragen von Daten drahtgebunden oder drahtlos miteinander verbunden sind.

14. System nach Anspruch 13, wobei die Erfassungsvorrichtung (2010) eine Infrarotkamera umfasst, die konfiguriert ist, um einen Satz von Zeitskaleninfrarotkarten, M[T], zu erfassen und die Infrarotkamera oder die Datenverarbeitungsvorrichtung (4000) Mittel zum Umwandeln des Satzes von Zeitskaleninfrarotkarten in einen Satz I3000 von Zeitskalentemperaturkarten umfasst.

15. System nach einem der Ansprüche 13 bis 14, wobei die Datenverarbeitungsvorrichtung (4000) ferner Mittel zum Korrigieren der perspektivischen Ansicht der Erfassungsvorrichtung durch Anwenden einer perspektivischen oder homographischen Transformationsfunktion auf jede Temperaturkarte des Satzes (I3000) von Zeitskalentemperaturkarten M[T] umfasst.

**Revendications**

1. Procédé implémenté par ordinateur (3000) permettant de mesurer l'épaisseur, e, d'un lot (2005) de matériaux flottant sur un bain (2006) de matière fondue dans un four électrique de fusion de verre ou de pierre (1002) ;

   dans lequel ledit procédé prend, en guise de données d'entrée, un ensemble (I3000) de cartes de température d'échelle temporelle, M[T] du lot (2005) de matériaux, une plage, R[Ts] de valeurs attendues pour la température stationnaire, Ts, du lot (2005), et une valeur seuil, $\sigma$, pour la variation de température, $\Delta T$, au fil du temps, $\Delta t$ ;
   dans lequel ledit procédé fournit, en guise de données de sortie, la distribution spatiale (O3000) d'épaisseurs du lot (2005) sur la surface de celui-ci ;
   dans lequel ledit procédé (3000) comprend les étapes suivantes :

   (a) la sélection (3001), au sein de chaque carte de température, M[T], de l'ensemble fourni I3000, des régions pour lesquelles la température est au sein de la plage R[Ts] de valeurs attendues pour la température stationnaire, Ts, du lot (2005) ;
   (b) le calcul informatique (3002) de la variation de température, $\Delta T$, au sein des mêmes régions détectées entre des cartes de température successives dans une plage de temps donnée, $\Delta t$ ;
   (c) la sélection (3003) des régions de l'étape (b) dans lequel la variation $\Delta T$ de température au fil du temps, $\Delta t$, est inférieure à la valeur seuil, $\sigma$, fournie en guise d'entrée ;
   (d) le calcul informatique (3004), pour chaque point des cartes de température au sein de chacune des régions sélectionnées à l'étape (c), de l'épaisseur, E, du lot 2005, dans lequel ladite épaisseur, E, est calculée en appliquant, sur chaque point précité, une fonction, E(Ts), définissant une relation entre l'épaisseur et la température stationnaire, Ts, et dans lequel ladite fonction, E(Ts), est basée sur un transfert de flux de chaleur simulé ou expérimental, ou d'un modèle empirique.

2. Procédé (3000) selon la revendication 1, dans lequel ledit procédé prend en outre, en guise de données d'entrée, la température, $T_f$, au sein de la zone interne du four 1002 au-dessus du lot (2005), la température, $T_{matière\,fondue}$, du bain (2006) de matière fondue ;

   dans lequel la fonction E(Ts) est une fonction de transfert de flux de chaleur fournie par l'équation suivante

$$E(T_s) = \frac{\lambda(T_{matière\,fondue} - T_s)}{h(T_s - T_f) + \sigma\varepsilon(T_s^4 - T_f^4)}$$

   dans lequel $\lambda$ est la conductivité thermique du lot 2005, $\sigma$ est la constante de Stefan-Boltzmann, h est le coefficient de transfert de chaleur par convection du lot 2005, $\varepsilon$ est un coefficient d'émissivité thermique du lot 2005, $T_f$ est la température au sein de la zone interne du four au-dessus du lot 2005, $T_{matière\,fondue}$ est la température du bain 2006 de matière fondue, et Ts est la température stationnaire du lot 2005 pour lequel l'épaisseur, E, doit être calculée informatiquement.

3. Procédé (3000) selon la revendication 1, dans lequel la fonction E(Ts) est un modèle empirique fourni par l'équation suivante : $E(T_s) = e_1 + \dfrac{T_s - T_1}{T_2 - T_1}(e_2 - e_1)$ dans lequel $T_1$ et $T_2$ sont deux températures stationnaires mesurées expérimentalement du lot 2005, $e_1$ et $e_2$ sont deux épaisseurs mesurées expérimentalement du lot 2005 correspondant aux températures $T_1$ et $T_2$ respectivement, Ts est la température stationnaire du lot 2005 pour lequel l'épaisseur, E, doit être calculée informatiquement.

4. Procédé (3000) selon l'une quelconque des revendications 1 à 2, dans lequel la valeur seuil, σ, pour la variation ΔT de température au fil du temps, Δt, est de 5 °C/min, de préférence 2 °C/min, plus préférablement 1 °C/min.

5. Procédé (3000) selon l'une quelconque des revendications 1 à 4, dans lequel la plage, R[Ts], de valeurs attendues pour la température stationnaire, Ts, du lot 2005 est une plage de valeurs déterminée expérimentalement sur des lots similaires de matériaux dans des conditions similaires de fusion ou une plage définie de valeurs entre les deux modes d'une distribution bimodale calculée informatiquement à partir d'une ou d'une pluralité des cartes de température de l'ensemble fourni (I3000).

6. Procédé (3000) selon l'une quelconque des revendications 1 à 5, dans lequel le procédé comprend en outre une étape (e) de détection de régions, au sein de chaque carte de température de l'ensemble fourni I3000, en appliquant une fonction de détection d'objet à ladite carte de température, dans lequel la fonction de détection d'objet est configurée pour traiter des régions avec une température égale ou supérieure à une valeur seuil, θ ; dans lequel le procédé fournit en outre, en guise de données de sortie, la distribution spatiale des régions détectées au fil du temps.

7. Procédé (3000) selon la revendication 6, dans lequel le procédé comprend une étape (f) de calcul informatique de la vitesse des régions détectées à l'étape (e) en calculant le déplacement desdites régions au fil du temps dans l'échelle temporelle de l'ensemble de cartes de température d'échelle temporelle.

8. Procédé (3000) selon l'une quelconque des revendications 6 à 7, dans lequel la fonction de détection d'objet est sélectionnée parmi la fonction de seuillage d'Otsu, la fonction de Laplacien du Gaussien, la fonction de Déterminant de la matrice Hessienne, le procédé de Différence de Gaussiennes et une fonction de détection de taches en niveau de gris par ligne de partage des eaux.

9. Dispositif de traitement de données (4000) comprenant un moyen permettant d'effectuer un procédé selon l'une quelconque des revendications 1 à 8.

10. Programme informatique (I4001) comprenant des instructions qui, lorsque le programme est exécuté par un ordinateur, amènent l'ordinateur à effectuer un procédé selon l'une quelconque des revendications 1 à 8.

11. Support lisible par ordinateur (4002) comprenant des instructions qui, lorsque le programme est exécuté par un ordinateur, amènent l'ordinateur à effectuer un procédé selon l'une quelconque des revendications 1 à 8.

12. Processus permettant de mesurer l'épaisseur d'un lot (2005) de matériaux (1001a) flottant sur un bain (2006) de matière fondue dans un four électrique de fusion de verre ou de pierre (1002), dans lequel ledit processus comprend les étapes suivantes :

    - l'acquisition d'un ensemble (I3000) de cartes de température d'échelle temporelle, M[T], de la surface du lot (2005) de matériaux (1001a) au sein de la zone interne (2009) du four de fusion (1002) ;
    - l'implémentation, au moyen d'un dispositif de traitement de données (4000), du procédé (3000) selon l'une quelconque des revendications 1 à 8, dans lequel l'ensemble (I3000) acquis de cartes de température d'échelle temporelle M[T] est fourni en guise de données d'entrée audit procédé (3000).

13. Système permettant de mesurer l'épaisseur d'un lot (2005) de matériaux (1001a) flottant sur un bain (2006) de matière fondue dans un four électrique de fusion de verre ou de pierre (1002), dans lequel ledit système comprend :

    - un dispositif d'acquisition (2010) configuré pour acquérir un ensemble (I3000) de cartes de température d'échelle temporelle, M[T], de la surface du lot 2005 de matériaux (1001a) au sein de la zone interne (2009) du four (1002) ;

- un dispositif de traitement de données (4000) selon la revendication 9, dans lequel ledit dispositif de traitement de données (4000) et le dispositif d'acquisition (2010) sont connectés par fil ou sans fil l'un à l'autre pour un transfert de données.

14. Système selon la revendication 13, dans lequel le dispositif d'acquisition (2010) comprend une caméra infrarouge qui est configurée pour acquérir un ensemble de cartes infrarouges d'échelle temporelle, M[T] et ladite caméra infrarouge, ou le dispositif de traitement de données (4000) comprend un moyen permettant de convertir l'ensemble de cartes infrarouges d'échelle temporelle en un ensemble I3000 de cartes de température d'échelle temporelle.

15. Système selon l'une quelconque des revendications 13 à 14, dans lequel le dispositif de traitement de données (4000) comprend en outre un moyen permettant de corriger la vue en perspective du dispositif d'acquisition en appliquant une fonction de transformation perspective ou homographique sur chaque carte de température de l'ensemble (I3000) de cartes de température d'échelle temporelle M[T].

[Fig. 1]

**Fig. 1**

[Fig. 2]

**Fig. 2**

[Fig. 3]

Fig. 3

[Fig. 4]

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5339204 A
- JP H07216422 A
- JP 2010002150 A
- US 2018231875 A1
- WO 8002833 A1
- US 4194077 A
- US 4409012 A
- JP H0656432 A
- WO 0248057 A1
- EP 1655570 A1
- WO 2018104695 A1
- WO 2022242843 A1
- FR 2599734 A1